# EUROPEAN PATENT SPECIFICATION

(11) **EP 1 177 085 B1**
(45) Date of publication and mention of the grant of the patent: **04.08.2004**
(21) Application number: 99974120.0
(22) Date of filing: 30.07.1999
(51) Int. Cl.: B29C 39/24

(54) **MOULDING APPARATUS AND METHOD OF MOULDING**
SPRITZGIESSVORRICHTUNG UND SPRITZGIESSMETHODE
DISPOSITIF ET PROCEDE DE MOULAGE

(30) Priority: 31.07.1998 ZA 9806866
(43) Date of publication of application: 06.02.2002
(60) Divisional application: 03020241.0
(73) Proprietor: Lomold International Limited, Guernsey GY1 3HN (GB)
(72) Inventor: Human, Jan Petrus, Somerset West 7130 (ZA)
(74) Representative: McDonough, Jonathan
(86) International application number: PCT/ZA1999/000057
(87) International publication number: WO 2000/006359

(56) References cited:
- EP-A- 0 510 414
- DE-A- 1 926 032
- FR-A- 2 225 271
- US-A- 2 704 380
- PATENT ABSTRACTS OF JAPAN vol. 006, no. 178 (M-155), 11 September 1982 (1982-09-11) & JP 57 087340 A (TOSHIBA MACH CO LTD), 31 May 1982 (1982-05-31)
- PATENT ABSTRACTS OF JAPAN vol. 013, no. 006 (M-781), 9 January 1989 (1989-01-09) & JP 63 216720 A (MASAAKI UCHIDA;OTHERS: 01), 9 September 1988 (1988-09-09)

## Description

### FIELD OF THE INVENTION

THIS INVENTION relates to moulding apparatus and to a method of moulding.

### BACKGROUND TO THE INVENTION

Many types of moulding apparatus are known, the most widely used being injection moulding apparatus. Whilst this apparatus can make complex articles it does have limitations insofar as the materials it can mould are concerned. The present invention seeks to provide moulding apparatus which has attributes that injection moulding apparatus does not have.

EP-A-0 510 414 discloses a method and apparatus wherein mouldable material is fed to a holding cavity which communicates with a molding cavity.

### BRIEF DESCRIPTION OF THE INVENTION

According to a first aspect of the present invention there is provided a method of moulding in which mouldable material is fed to a holding cavity which communicates with a moulding cavity and thereafter a piston is advanced from a retraced position to a forward position so that a front face of the piston displaces said mouldable material out of the holding cavity and into said moulding cavity, said front face of the piston becoming part of the bounding wall of the moulding cavity upon the piston reaching its forward position, characterized by the steps of:
a) closing a valve structure which is between the holding cavity (C) and the moulding cavity;
b) feeding a charge of mouldable material into the holding cavity between said closed valve structure and the front face of the piston to file the holding cavity;
c) opening the valve structure; and
d) advancing the piston to displace the mouldable material out of the holding cavity through the valve structure and into the moulding cavity.

Vacuum can be applied to the moulding cavity as the charge of mouldable material is forced into the moulding cavity.

The method of the invention can comprise the step of feeding said mouldable material to said holding cavity which is in a barrel, said holding cavity being bounded on one side by said front face of said piston, the piston being advanced through the valve means whilst the valve means is in its open condition.

The charge can be fed into said holding cavity through passages in the piston. The piston can be collapsible and the charge moves into the cavity between the piston and the barrel.

According to a further aspect of the invention there is provided a moulding apparatus comprising a component having a holding cavity therein, means for feeding mouldable material to said holding cavity, a piston having a front face, the front face of the piston forming one bounding wall of the holding cavity, an opening which, in use, places said holding cavity in communication with a moulding cavity, and means for advancing said piston from a retraced position so that its front face displaces mouldable material out of said holding cavity through said opening and into the moulding cavity, said front face of the piston, in use, becoming part of the bounding wall of said moulding cavity, characterized by a shut off means having a first position in which a front end of the holding cavity (C) is closed and a second position in which a front end of the holding cavity (C) is open, said piston's front face forcing material through the open shut off means and into the moulding cavity when the piston is advanced.

The position to which the piston retracts can be adjustable thereby to enable the volume of said holding cavity to be varied.

The apparatus can include a feed opening in the bounding wall of the holding cavity, characterized in that said feed opening is a passage which passes through the piston and emerges through said face of the piston.

The apparatus can include a feed opening in the bounding wall of the holding cavity characterized in that said feed opening is in the walling of said holding cavity between said shut off means and said retracted position of the piston.

### BRIEF DESCRIPTION OF THE DRAWINGS

For a better understanding of the present invention, and to show how the same may be carried into effect, reference will now be made, by way of example, to the accompanying drawings in which:-
Figures 1 and 2 are longitudinal sections showing moulding apparatus according to the present invention in different operative conditions.
Figure 3 is a diagrammatic section illustrating part of the moulding apparatus to a larger scale;
Figure 4 illustrates a shut off valve of the apparatus of Figure 1 to an enlarged scale;
Figure 5 is an "exploded" pictorial view of the shut off valve of Figure 4; and
Figure 6 shows the valve of Figure 5 when assembled.

### DETAILED DESCRIPTION OF THE DRAWINGS

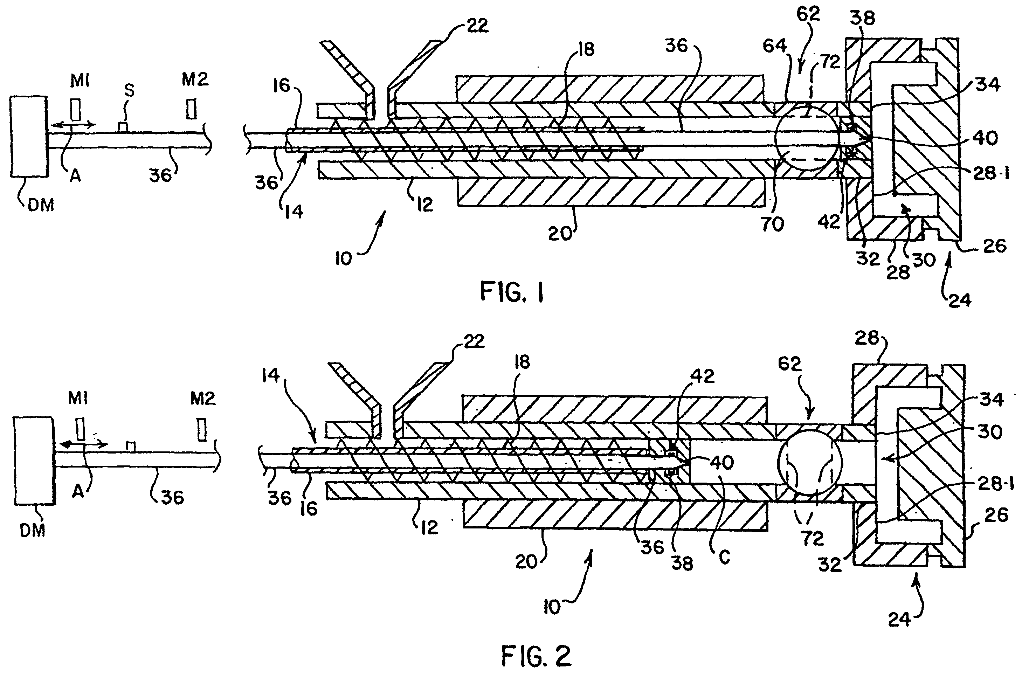

Referring firstly to Figures 1 and 2, the moulding apparatus 10 illustrated comprises an elongate melt barrel 12 which has therein a feed screw 14 comprising a sleeve 16 which carries a flight 18. A heating collar 20 encircles the barrel 12.

A hopper 22 leads into the rear end of the melt barrel 12 and pellets of synthetic plastics material feed into the flight 18 from the hopper 22.

A mould 24 comprising a male part 26 and a female part 28 bound a cavity 30 which has the shape of the article to be moulded. The female mould part 28 has a bore 32 therein and the leading end of the melt barrel 12 is inserted into the bore 32 and is a tight fit therein. The front end face 34 of the barrel 12 is flush with the surface 28.1 of the mould part 28 which bounds one side of the cavity 30.

A shaft 36 (see Figures 1, 2 and 3) slides within the sleeve 16. The end portions of the shaft 36 protrude beyond the sleeve 16 in both directions. A pneumatic or hydraulic cylinder, an hydraulic or electric motor of any other suitable drive means diagrammatically shown at DM in Figures 1 and 2, is provided for displacing the shaft 36 in forward and return strokes. At the rear end of the shaft 36, the left hand end in Figures 1 and 2, there are means which control the length of the stroke of the shaft 36. These means can be optical, mechanical or electromechanical and they control supply of power to the cylinder or motor which displaces the shaft 36 to and fro in the sleeve 16. In a simple form the shaft 36 carries a protruding striker S and there are micro-switches M1, M2 adjacent the shaft. At least the micro-switch M1 can be adjusted in position as shown by the double headed arrow A.

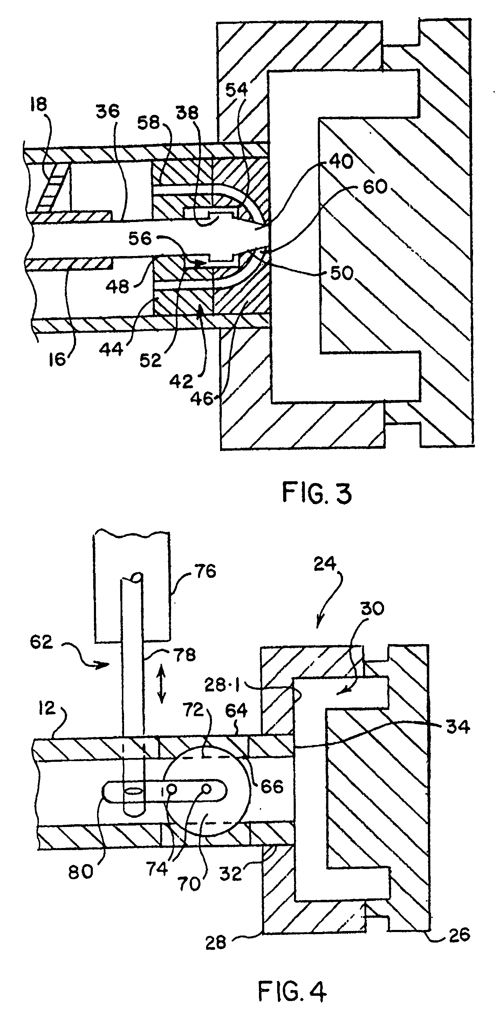

The shaft 36 has an enlarged head 38 (see Figure 3) at the forward end thereof, and a frusto conical portion 40 beyond the head 38. On the forward end of the shaft 16 there is a piston 42.

The piston 42 comprises two parts 44 and 46 which are bolted or otherwise secured together. The parts 44 and 46 have axial bores 48 and 50 therein for receiving the shaft 36. Encircling the bores 48 and 50, and in those faces of the parts 44 and 46 which abut one another, are recesses 52 and 54. The head 38 of the shaft 36 is within the cavity 56 constituted by the registering recesses 52 and 54. The bore 48 is cylindrical to match the circular cross-section of the shaft 36 and the bore 50 is of tapering form to match the portion 40. The cavity 56 is bigger than the head 38 both axially and radially.

The part 44 has flow passages 58 therein, the passages being arranged in a circular array around the bore 48. The passages 58 extend axially. Further flow passages 60 are provided in the part 46. The passages 60 are also arranged in a circular array, the inlets to the passages 60 registering with the exits from the passages 58. Each passage 60 curves inwardly from its inlet end and its exit is where it enters the bore 50.

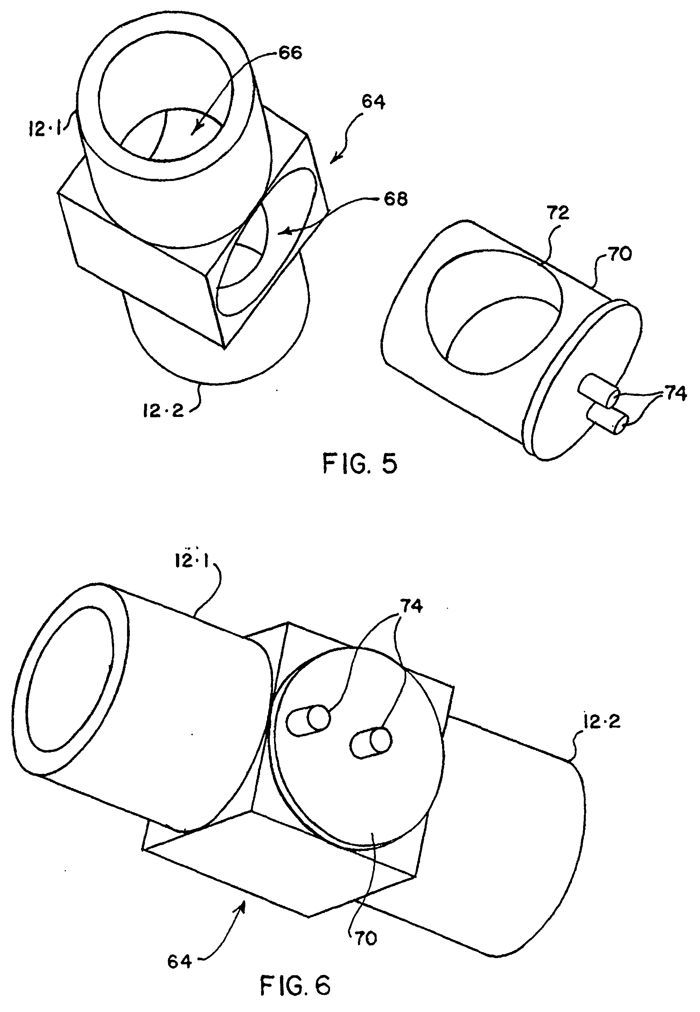

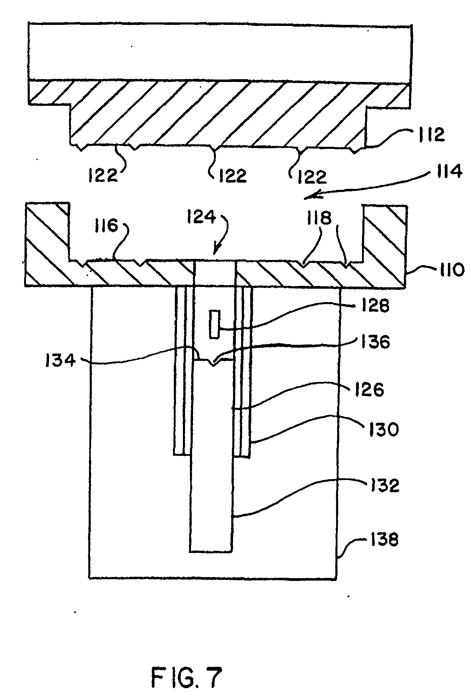

A shut-off structure generally designated 62 is located in the barrel 12 adjacent the leading end of the barrel 12. The structure 62 is only shown in outline in Figure 1 and is illustrated in more detail in Figures 4, 5 and 6. The structure 62 comprises a hollow block 64 which is located between two sections of the barrel 12. The sections are designated 12.1 and 12.2 in Figures 5 and 6. The block 64 has a first bore 66 therethrough which is of the same diameter as the inside diameter of the barrel and is co-axial with the barrel. The block 64 has a second bore 68 which extends transversely and receives a rotatable shut-off member 70. The member 70 is cylindrical and fits snugly in the bore 68. The member 70 itself has a transverse bore 72 which is of the same diameter as the bore 66 and the inside diameter of the barrel 12. Two pins 74 protrude from one end face of the member 70. The pins 74 are connected to an actuator 76 (Figure 4) by way of two rods 78 and 80. The actuator 76 can be, for example, a solenoid, which oscillates the rod 78 vertically. The rod 80 is connected to the pins 74 and is oscillated about an axis co-incident with the axis of the member 70.

In use of the apparatus, pellets of thermoplastic material entering the barrel 12 from the hopper 22 are mixed in the barrel by the shearing action of the flight 18. The pellets melt as a result of the heating and shearing to which they are subjected.

Whilst the shaft 36 is in the retracted position shown in Figure 2, the rotating screw 14 feeds molten plastic material against the rear face of the piston 42. The piston 42 is forced as far to the right with respect to the shaft 36 as the play of the head 38 in the cavity 56 will allow. Plastics material then flows through the passages 58 and 60 and part of the bore 50 into the chamber C (Figure 2) between the piston 42 and the structure 62. At this time the member 70 is so positioned that the bore 72 lies at right angles to the bore 66. The member 70 thus shuts off the left hand part of the barrel 12 from the right hand part and the mould cavity. The position to which the shaft 36 has retracted determines the volume of the chamber C.

A sensor (not shown) can be provided in conjunction with the screw 14 or in conjunction with the motor which drives it. Upon the chamber C filling, resistance to rotation of the screw 14 increases. This increased resistance can be used temporarily to terminate rotation of the screw.

The member 70 is then rotated through a right angle to align the bore 72 with the bore 66. The shaft 36 is then advanced to the right as viewed in Figures 1 and 2. The first part of the movement of the shaft 36 is relative to the piston 42. The portion 40 moves fully into the bore 50 and closes off the passages 60 thereby to prevent reverse flow of molten material.

The piston 42 moves along the barrel 12, enters the block 64, passes through the bore 72 and then through the remainder of the block 64. As the piston moves forward the plastics material which occupied the chamber C is pushed into the mould cavity 30. The front face of the part 46, when the shaft 36 is in its fully advanced position, lies flush with the face 34 of the melt barrel and forms part of the bounding wall of the cavity 30.

Once the plastics material in the mould cavity has hardened, the mould part 26 is retracted to enable ejector pins (not shown) to displace the moulded article out of the female mould part 28. The shaft 36 then moves back to the left. The play between the head 38 and the part 44 is first taken up and then the piston 42 moves to the left with the shaft to begin another cycle.

The volume of the chamber C is determined by the position of the micro-switch M1 which terminates the retraction of the shaft 36. If the micro-switch is moved to the right in Figures 1 and 2, retraction of the shaft stops early. The chamber C is thus of small volume. If the shaft retracts to the fullest extent possible, the chamber C is of its greater volume. By making some trial mouldings with too little plastics, and then moving the micro-switch M1 to the left, it is possible to so adjust the apparatus that the volume of the chamber C equals the volume of the cavity 30.

Whilst in the illustrated form of the apparatus there is a single chamber C, it is desirable to provide a multitude of barrels, chambers and shafts. The shafts can displace mouldable material into one mould cavity or a plurality of mould cavities.

In the first form one component having a volume equal to the total of the volumes of the chambers C can be made. in a second form a plurality of identical or different components can be formed. For example, all the components for one article can be produced in a single cycle. Because each chamber C is individually supplied with mouldable material, the components can be of different mouldable material and/or can be of different colours.

As the apparatus described does not include narrow gates, sprues and runners that block easily, it is believed that a much wider range of materials will be mouldable in the apparatus described than can be moulded with currently available injection moulding machines. For example, as there are no pin gates that can be blocked, it is believed that synthetic plastics materials with fibres dispersed therein can be moulded. Provided the materials used in the construction of the apparatus are able to withstand the temperatures which must be attained, it is believed that the moulding of glass and ceramic articles will be possible.

It is possible for the piston to be collapsible and not have passages therethrough. In this form the material is fed to the chamber C around the periphery of the piston. The piston is then expanded before being displaced along the barrel.

In a further modified form the piston is a unit similar to that shown and includes a longitudinal bore and a transverse bore. A closure member, equivalent to the closure member 70, is provided in the transverse bore. The transverse closure member includes gear teeth which mesh with stationary gear teeth in the barrel. Engagement between the two sets of teeth rotates the closure member between its open and closed positions. Thus no flow past the piston is permitted whilst it is moving forward, but flow is permitted to enable the chamber C to be filled. It is also possible to provide a gate which slides transversely and which has a hole in it through which the piston 42 can pass.

## Claims

1. A method of moulding in which mouldable material is fed to a holding cavity which communicates with a moulding cavity and thereafter a piston is advanced from a retracted position to a forward position so that a front face of the piston displaces said mouldable material out of the holding cavity and into said moulding cavity, said front face of the piston becoming part of the bounding wall of the moulding cavity upon the piston reaching its forward position, **characterized by** the steps of:
a) closing a valve structure (62) which is between the holding cavity (C) and the moulding cavity (30);
b) feeding a charge of mouldable material into the holding cavity between said closed valve structure (62) and the front face of the piston (42) to fill the holding cavity;
c) opening the valve structure (62); and
d) advancing the piston (42) to displace the mouldable material out of the holding cavity through the valve structure and into the moulding cavity.

2. A method of moulding as claimed in claim 1, and including the step of applying vacuum to the moulding cavity as the charge of mouldable material is forced into the moulding cavity.

3. A method of moulding as claimed in claim 1 or 2 and which comprises feeding said mouldable material to said holding cavity which is in a barrel, said holding cavity being bounded on one side by said front face of said piston, the piston (42) being advanced through the valve means (62) whilst the valve means is in its open condition.

4. A method as claimed in claim 3, wherein the charge is fed into said holding cavity through passages (58) in the piston (42).

5. A method as claimed in claim 3, wherein the piston is collapsible and the charge moves into the cavity through a gap between the piston and the barrel.

6. Moulding apparatus comprising a component having a holding cavity therein, means for feeding mouldable material to said holding cavity, a piston having a front face, the front face of the piston forming one bounding wall of the holding cavity, an opening which, in use, places said holding cavity in communication with a moulding cavity, and means for advancing said piston from a retracted position so that its front face displaces mouldable material out of said holding cavity through said opening and into the moulding cavity, said front face of the piston, in use, becoming part of the bounding wall of said moulding cavity, **characterized by** a shut off means (62) having a first position in which a front end of the holding cavity (C) is closed and a second position in which a front end of the holding cavity (C) is open, said piston's (42) front face forcing material through the open shut off means (62) and into the moulding cavity (30) when the piston (42) is advanced.

7. Moulding apparatus according to claim 6, wherein the position to which the piston retracts is adjustable thereby to enable the volume of said holding cavity to be varied.

8. Moulding apparatus according to claim 6 and including a feed opening in the bounding wall of the holding cavity, **characterized in that** said feed opening is a passage (58) which passes through the piston (42) and emerges through said face of the piston.

9. Apparatus according to claim 6 and including a feed opening in the bounding wall of the holding cavity, **characterized in that** said feed opening is in the walling of said holding cavity between said shut off means and said retracted position of the piston.

## Patentansprüche

1. Formgebungsverfahren, bei welchem formbares Material einem Haltehohlraum zugeführt wird, der mit einem Formgebungshohlraum in Verbindung steht, und daraufhin ein Kolben von einer zurückgezogenen Position zu einer Vorwärtsposition vorgestellt wird, so dass eine vordere Oberfläche des Kolbens das formbare Material aus dem Haltehohlraum und in den Formgebungshohlraum verdrängt, und die vordere Oberfläche des Kolbens zu einem Teil der Begrenzungswand des Formgebungshohlraums wird, nach dem der Kolben seine Vorwärtsposition erreicht hat, **gekennzeichnet durch** folgende Schritte:
a) Schließen einer Ventilanordnung (62), die zwischen dem Haltehohlraum (C) und dem Formgebungshohlraum (30) vorgesehen ist;
b) Zuführen einer Beschickung aus formbarem Material in den Haltehohlraum zwischen der geschlossenen Ventilanordnung (62) und der vorderen Oberfläche des Kolbens (42) zum Füllen des Haltehohlraums;
c) Öffnen der Ventilanordnung (62); und
d) Vorstellen des Kolbens (42) zur Verdrängung des formbaren Materials aus dem Halthohlraum **durch** die Ventilanordnung und in den Formgebungshohlraum.

2. Formgebungsverfahren nach Anspruch 1, welches den Schritt umfasst, Vakuum an den Formgebungshohlraum anzulegen, wenn die Beschickung aus formbarem Material in den Formgebungshohlraum gezwungen wird.

3. Formgebungsverfahren nach Anspruch 1 oder 2, welches umfasst, das formbare Material dem Haltehohlraum zuzuführen, der in einem Zylinder angeordnet ist, wobei der Haltehohlraum an einer Seite durch die vordere Oberfläche des Kolbens begrenzt wird, und der Kolben (42) durch die Ventilvorrichtung (62) vorgestellt wird, während sich die Ventilvorrichtung in ihrem offenen Zustand befindet.

4. Verfahren nach Anspruch 3, bei welchem die Beschickung in den Haltehohlraum durch Kanäle (58) in dem Kolben (42) zugeführt wird.

5. Verfahren nach Anspruch 3, bei welchem der Kolben zusammenlegbar ist, und sich die Beschickung in den Hohlraum über einen Spalt zwischen dem Kolben und dem Zylinder bewegt.

6. Formgebungseinrichtung, die ein Bauteil aufweist, in welchem ein Haltehohlraum vorgesehen ist, eine Vorrichtung zur Zuführung formbaren Materials zu dem Haltehohlraum, einen Kolben, der eine vordere Oberfläche aufweist, wobei die vordere Oberfläche des Kolbens eine Begrenzungswand des Haltehohlraums bildet, eine Öffnung, die im Gebrauch den Haltehohlraum in Verbindung mit einem Formgebungshohlraum bringt, und eine Vorrichtung zum Vorstellen des Kolbens von einer zurückgezogenen Position, so dass seine vordere Oberfläche formbares Material aus dem Haltehohlraum durch die Öffnung und in den Formgebungshohlraum verdrängt, wobei die vordere Oberfläche des Kolbens im Gebrauch ein Teil der Begrenzungswand des Formgebungshohlraums wird, **gekennzeichnet durch** eine Abschaltvorrichtung (62), die eine erste Position aufweist, in welcher ein vorderes Ende des Halthohlraums (C) geschlossen ist, und eine zweite Position, in welcher ein vorderes Ende des Haltehohlraums (C) geöffnet ist, wobei die vordere Oberfläche des Kolbens (42) Material **durch** die geöffnete Abschaltvorrichtung (62) und in den Formgebungshohlraum (30) zwingt, wenn der Kolben (42) vorgestellt wird.

7. Formgebungseinrichtung nach Anspruch 6, bei welcher die Position, zu welcher sich der Kolben zurückzieht, einstellbar ist, um hierdurch zu ermöglichen, dass das Volumen des Haltehohlraums variiert wird.

8. Formgebungseinrichtung nach Anspruch 6, welche eine Zuführöffnung in der Begrenzungswand des Halthohlraums aufweist, **dadurch gekennzeichnet, dass** die Zuführöffnung ein Kanal (58) ist, der durch den Kolben (42) hindurchgeht, und durch die Oberfläche des Kolbens austritt.

9. Einrichtung nach Anspruch 6, die eine Zuführöffnung in der Begrenzungswand des Haltehohlraums aufweist, **dadurch gekennzeichnet, dass** die Zuführöffnung in der Wandung des Halthohlraums zwischen der Abschaltvorrichtung und der zurückgezogenen Position des Kolbens vorgesehen ist.

## Revendications

1. Procédé de moulage dans lequel une matière moulable est introduite dans une cavité de retenue qui communique avec une cavité de moulage et, ensuite, un piston est avancé d'une position rétractée à une position avancée, de sorte qu'une face frontale du piston expulse ladite matière moulable de la cavité de retenue et l'introduit dans ladite cavité de moulage, ladite face frontale du piston devenant une partie de la paroi de limitation de la cavité de moulage lorsque le piston atteint sa position avancée, **caractérisé par** les étapes suivantes :
a) fermer une structure de soupape (62) qui se trouve entre la cavité de retenue (C) et la cavité de moulage (30) ;
b) introduire une charge de matière moulable dans la cavité de retenue entre ladite structure de soupape (62) fermée et la face frontale du piston (42) pour remplir la cavité de retenue ;
c) ouvrir la structure de soupape (62) ;
d) faire avancer le piston (42) pour expulser la matière moulable de la cavité de retenue à travers la structure de soupape et l'introduire dans la cavité de moulage.

2. Procédé de moulage selon la revendication 1 et comprenant l'étape consistant à appliquer un vide à la cavité de moulage pendant que la charge de matière moulable est introduite à force dans la cavité de moulage.

3. Procédé de moulage selon la revendication 1 ou 2, et qui consiste à introduire ladite matière moulable dans ladite cavité de retenue qui se trouve dans un cylindre, ladite cavité de retenue étant limitée d'un côté par ladite face frontale dudit piston, le piston (42) étant avancé à travers les moyens de soupape (62) pendant que les moyens de soupape sont dans leur état ouvert.

4. Procédé selon la revendication 3, dans lequel la charge est introduite dans ladite cavité de retenue à travers des passages (58) ménagés dans le piston (42).

5. Procédé selon la revendication 3, dans lequel le piston peut se rétrécir et la charge pénètre dans la cavité à travers un espace libre entre le piston et le cylindre.

6. Dispositif de moulage comprenant un composant qui présente intérieurement une cavité de retenue, des moyens destinés à introduire de la matière moulable dans ladite cavité de retenue, un piston ayant une face frontale, la face frontale du piston formant une paroi de limitation de la cavité de retenue, une ouverture qui, en utilisation, met ladite cavité de retenue en communication avec une cavité de moulage, et des moyens destinés à faire avancer ledit piston à partir d'une position rétractée de manière que sa face frontale expulse la matière moulable de ladite cavité de retenue à travers ladite ouverture en l'introduisant dans la cavité de moulage, ladite face frontale du piston devenant en utilisation une partie de la paroi de limitation de ladite cavité de moulage, **caractérisé par** un moyen de fermeture (62) ayant une première position dans laquelle une extrémité avant de la cavité de retenue (C) est fermée et une seconde position dans laquelle une extrémité avant de la cavité de retenue (C) est ouverte, la face frontale dudit piston (42) refoulant la matière à force à travers le moyen de fermeture (82) ouvert et dans la cavité de moulage (30) lorsque le piston (42) est avancé.

7. Dispositif de moulage selon la revendication 6, dans lequel la position à laquelle le piston se rétracte est réglable, pour permettre de faire varier le volume de ladite cavité de retenue.

8. Dispositif de moulage selon la revendication 6 et comprenant une ouverture d'introduction ménagée dans la paroi de limitation de la cavité de retenue, **caractérisé en ce que** ladite ouverture d'introduction est un passage (58) qui passe à travers le piston (42) et émerge à travers ladite face du piston.

9. Dispositif selon la revendication 6, et comprenant une ouverture d'introduction dans la paroi de limitation de la cavité de retenue, **caractérisé en ce que** ladite ouverture d'introduction est prévue dans la paroi de ladite cavité de retenue entre ledit moyen de fermeture et ladite position rétractée du piston.
